# EUROPEAN PATENT SPECIFICATION

(11) **EP 2 684 465 B1**
(45) Date of publication and mention of the grant of the patent: **09.11.2016**
(21) Application number: 12184218.1
(22) Date of filing: 13.09.2012
(51) Int. Cl.: A23G 9/04, A23G 9/06, A23G 9/32

(54) **A method for manufacturing of ice cream on a stick**
Verfahren zur Herstellung von Eiscreme an einem Stiel
Procédé de fabrication de crème glacée sur un bâtonnet

(30) Priority: 10.07.2012 PL 39988412
(43) Date of publication of application: 15.01.2014
(73) Proprietor: FF Marka Wlasna Sp. z o.o., 90-105 Lodz (PL)
(72) Inventor: Balcerzak, Irena, 95-082 Chechlo Pierwsze (PL); Witon, Malgorzata, 01-481 Warszawa (PL)
(74) Representative: Eupatent.pl

(56) References cited:
- US-A- 4 548 045
- US-A- 5 568 729
- US-A- 6 025 003
- US-B1- 6 596 333
- MARSHALL R T ET AL: "Ice Cream. Chapter 4. Composition and Properties, Fifth Edition", ICE CREAM, XX, XX, 1 January 2000 (2000-01-01), pages 22-23,28, XP002282748,

## Description

This invention concerns a method for manufacturing of ice cream on a stick, in particular of highly aerated ice cream.

A significant property of ice creams is their resistance to temperature changes during storage and transport. Appropriate procedures guarantee a stable, low temperature of the ice cream during warehousing by producers, transport to warehouse storage at the wholesaler's location and transport to retail points. However, during the storage of ice creams at the retail point, they may be subject to thermal shocks, resulting for example from power shortage of refrigerators, refrigerator door left open or transportation from the retail point to the consumer location in a packaging which is not thermally protected. Thermal shocks may result in the loss of aeration of the ice cream and properties of the sauce as well as generation of water crystals, which deteriorates their organoleptic properties.

The most important process in ice cream production is freezing - it is of utmost importance for the quality of ready product. For ice creams on a stick, the main purpose of low temperature is the development and settling of desirable structure and consistency of the products.

In a typical process for manufacturing of ice creams on a stick, an ice cream mixture is prepared from sugar, powdered milk, glucose syrup, liquid coconut fat, powdered whey, stabiliser and water, which is next submitted to homogenisation under the pressure of 14 MPa to 17 MPa and pasteurisation at the temperature of 80°C do 90°C during 2s to 30s. Afterwards, the mixture is cooled to the temperature of 3°C to 6°C and the process of maturing is performed under the temperature of 3°C to 6°C, concurrently with mixing during 2 to 4 hours. At this stage, additional ingredients can be added, such as flavours, food colorants and/or fruit pulps. Mature ice cream mixture is pushed to a freezer, in which it is frozen to the temperature of -4.5°C to -5.5°C and aerified by about 60%, after which the mixture is put into moulds. Next, sticks are placed in the partially frozen mixture using a stick pushing device. After the mixture is frozen, it is heated by the bottom part of the mould, removed from the mould using a catcher and transported by a belt conveyor to a packaging point where the products are put into individual and next collective packaging. Freezing of the product is performed using a cooling agent (brine), in which the mould is submerged. The material has no direct contact with the cooling agent. The brine is frozen in a cooling system using freon or ammonia. The lowest temperature of the cooling agent reached so far in the manufacturing plants while cooling the brine with freon or ammonia is approx.-40°C.

The above process is well suited for cooling ice cream produced from standard mixtures with a relatively low aeration, i.e. below 100%. The increase of ice cream aeration leads to the increase of crystallisation of water contained within the mixture, whereas the developed crystal nuclei gradually grow in size and volume, resulting in generation of irregular, coarse-grained, rough texture.

The aim of the invention is to provide an alternative method for freezing ice cream to obtain ice cream on a stick with a higher fluffiness and a low level of crystallisation.

The method for manufacturing of ice cream on a stick according to the invention comprises preparing a mixture comprising sugar from 10% to 12% by weight, glucose 45 syrup from 4% to 7% by weight, liquid coconut fat from 8% to 11% by weight, powdered whey from 2.5% to 6% by weight, protein concentrate from 0% to 3% by weight, skimmed milk powder from 2% to 7% by weight, colorants and flavourings from 0.05% to 0.5 by weight, stabiliser from 0.5% to 0.7% by weight and water complementing to 100% by weight. The mixture is submitted to homogenisation, pasteurisation, cooling, maturing with mixing and preliminary freezing with aeration, after which it is put into a mould and sticks are pushed into it, then the material is cooled in a cooling system using a cooling agent, in which the mould is submerged. Finally, the frozen ice creams are removed from the moulds using a grab and transported by a conveyor belt to a packing station where they are wrapped into individual and collective packaging. The stabiliser used for the mixture is a mixture of mono- and diglycerides esterified with lactic acid constituting from 55% to 65% by weight of the stabiliser; mono- and diglycerides from 15% to 25% by weight, xanthan gum from 10% to 20% by weight, guar gum from 10% to 20% by weight, antioxidants in the amount of up to 100 mg/kg and anti-radicals in the amount of up to 100 mg/kg. The mixture is aerified to 190%-210% of the volume of the mixture before aeration. The cooling agent is cooled to the temperature between -49°C to -51°C in a heat exchanger powered by carbon dioxide (CO₂) having a temperature between -52°C and -56°C, and the ice cream is freezed to obtain a temperature below -18°C within the total volume of the ice cream.

The object of the invention is also an ice cream on a stick manufactured using the method according to the invention.

The advantage of the invention is that by using CO₂ as a cooling agent it is possible to decrease the temperature of ice cream freezing from -40°C to -51°C, which shortens the freezing time by about 30%, which allows to obtain ice cream resistant to thermal shock and with aeration increased to the value of about 200%. Stable fluffiness of ice cream on such a high aeration level is possible due to the special stabiliser. Application of CO₂ as a cooling agent has additional environmental advantages. Contrary to harmful ammonia, CO₂ is non-toxic and contributes to obtaining a safe, ecological and biodegradable brine. Moreover, eliminating ammonia increases the safety of the production process against fire.

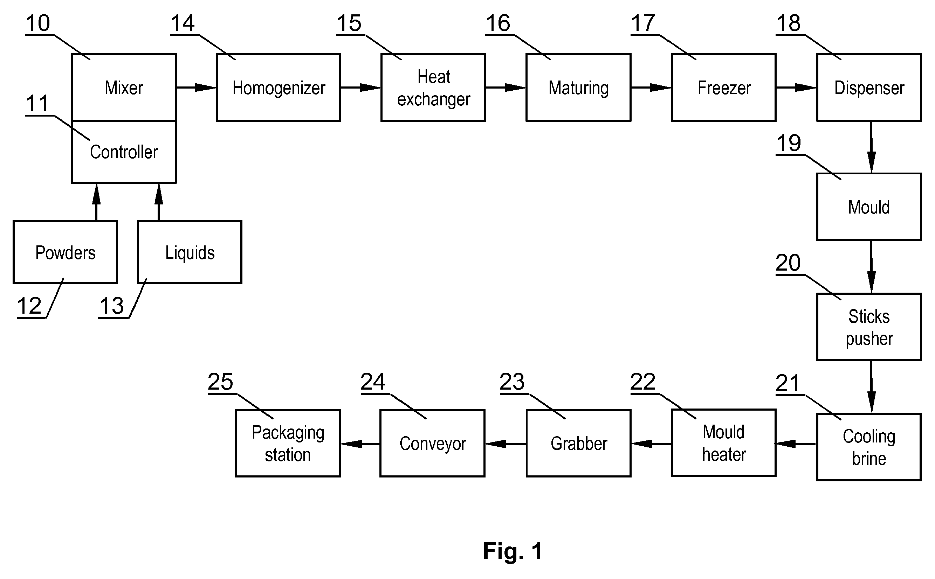

The present invention is shown by means of exemplary embodiment on a drawing, in which Fig. 1 presents a diagram of a technological line for manufacturing ice creams on a stick using the method according to the invention.

Powdered ingredients, such as: sugar, powder milk, powdered whey, protein concentrate and stabilisers are supplied from the powdered ingredient tanks 12 and liquid ingredients such as water, glucose syrup and liquid fat are supplied from the liquid ingredient tanks 13 to the mixer 10 under supervision of control devices (a controller 11).

The method according to the invention is adapted to be used with a mixture of the following content:
- Sugar: 10% to 12 % by weight of the total mass
- Glucose syrup 45:: 4% to 7% by weight of the total mass
- Liquid coconut fat:: 8.0% to 11 % by weight of the total mass
- Powdered whey:: 2.5% to 6% by weight of the total mass
- Protein concentrate:: 0% to 3% by weight of the total mass
- Powdered skimmed milk: 2% to 7% by weight of the total mass
- Food colorants, flavours:: 0.05% to 0.5% by weight of the total mass
- Stabiliser: 0.5% to 0.7% by weight of the total mass
- Water:: complementing to 100% by weight of the total mass

The stabiliser used for the mixture is a mixture of mono- and diglycerides esterified with lactic acid from 55% to 65% by weight, mono- and diglycerides from 15% to 25% by weight, xanthan gum from 10% to 20% by weight, guar gum from 10% to 20% by weight, antioxidants (e.g. alpha-tocopherol) in the amount of up to 100 mg/kg and anti-radicals (e.g. ascorbyl palmitate) in the amount of up to 100 mg/kg. Mono- and diglycerides are used as emulsifiers to emulsify fat, improving the disintegration of fat particles and binding with other ingredients, mainly proteins. Guar gum, on the other hand, is the main stabilising agent influencing the changes occurring in the air bubbles, preventing their decomposition or binding. Decomposition or binding of air bubbles results in the loss of ice cream volume in the course of temperature fluctuations during distribution. The stabiliser as described above proved to be particularly effective in retaining ice cream fluffiness at the aeration of about 200%.

The mixture prepared in the mixer 10 is supplied to a homogeniser 14 in which homogenisation of the mixture is performed by mixing water molecules with fat molecules and intensification of emulsifier operation. For the above mixture, homogenisation is conducted at the pressure of 16-18 MPa. Next, the mixture is submitted to pasteurisation in a heat exchanger 15 in order to eliminate or at least reduce the amount of microbes in the product, deactivate enzymes causing undesirable changes and precise mixing of the ingredients. Pasteurisation is performed at the temperature from 80°C to 90°C during 2s to 30s (VHT Pasteurisation, VHT - Very High Temperature). Afterwards, the mixture is cooled to the temperature from 3°C to 6°C. The cooled mixture is placed in a maturing tank 16, which is a tank with a mixer and performs the process of maturing with mixing at the temperature of 3°C do 6°C during 2 to 4 hours. During maturing, the viscosity of the mixture increases as a result of protein expansion and gelation of the stabiliser. At this stage additional ingredients can be added, such as flavours, food colorants and/or fruit pulps. The mature ice cream mixture is pushed to the freezer 17, in which it is frozen to the temperature from -4.5°C to -5.5°C and aerified to about 190%-220% of the mixture volume, which makes it smooth, soft and fluffy. The freezer 17, that is the device for preliminary freezing of ice cream, has the form of a vertical cylinder with double walls, between which cooling agent is applied, with a rotating shaft inside. The mixture freezes on the walls of the cylinder and then is scraped off. The cylinder is supplied with air, which aerates the mixture in effect of constant mixing. Then, the mixture is batched to moulds 19 using dispenser 18. The moulds 19 rotate intermittently according to impulses from a packing machine. Ice cream sticks are placed in the partially frozen mixture using a stick pushing device 20. Next, the ice creams in moulds are frozen in a freezing system 21. Freezing of the ice cream is performed using a cooling agent (brine), in which the mould is submerged. The ice cream mass has no direct contact with the cooling agent. According to the method of the invention, the brine is cooled to the temperature between -49°C and -51°C in a heat exchanger powered by carbon dioxide CO₂ with a temperature between -52°C and -56°C, until the ice cream is freezed to a temperature below -18°C within the total volume of the ice cream. Such a low temperature of the cooling agent shortens the freezing time by 30%, which improves the quality, structure and fluffiness of ready products, despite the aeration level which is much higher than standard. The decrease of the temperature of the cooling agent, and consequently decrease of the freezing time prevents generation of large crystals.

After freezing the mass, in order to remove it from the mould 19, the bottom part of the mould 19 is heated by a burner 22. The freezed ice cream is removed using a catcher 23 and transported by a conveyor belt 24 to a packing area 25 and placed into individual and collective packaging.

The application of the new method for manufacturing of ice creams on a stick, utilising brine cooled with carbon dioxide CO₂, instead of freon or ammonia as in standard procedures, allows to obtain ice creams with unprecedented fluffiness reaching 210%, with no large crystals in the ice cream mass.

## Claims

1. A method for manufacturing of ice cream on a stick, comprising preparing a mixture comprising sugar from 10% to 12% by weight, glucose 45 syrup from 4% to 7% by weight, liquid coconut fat from 8.0% to 11% by weight, powdered whey from 2.5% to 6% by weight, protein concentrate from 0% to 3% by weight, skimmed milk powder from 2% to 7% by weight, colorants and flavourings from 0.05% to 0.5 by weight, stabiliser from 0.5% to 0.7% by weight and water complementing to 100% by weight, wherein the mixture is submitted to consecutive processes of homogenisation, pasteurisation, cooling, maturing with mixing and preliminary freezing with aeration, after which the mass is put into a mould and sticks are pushed into it, then the material is cooled in a cooling system using a cooling agent, in which the mould is submerged, wherein the frozen ice creams are removed from the moulds using a grab and transported by a conveyor belt to a packing station where they are wrapped into individual and collective packaging, **characterized in that** the stabiliser used for the mixture is a mixture of mono- and diglycerides esterified with lactic acid constituting from 55% to 65% by weight of the stabiliser; mono- and diglycerides from 15% to 25% by weight, xanthan gum from 10% to 20% by weight, guar gum from 10% to 20% by weight, antioxidants in the amount of up to 100 mg/kg and anti-radicals in the amount of up to 100 mg/kg, and wherein the mixture is aerified to 190%-210% of the volume of the mixture before aeration and wherein the cooling agent is cooled to the temperature between -49°C to -51°C in a heat exchanger powered by carbon dioxide (CO₂) having a temperature between -52°C and -56°C, and wherein the ice cream is freezed to obtain a temperature below -18°C within the total volume of the ice cream.

## Patentansprüche

1. Verfahren zur Herstellung von Eiscreme an einem Stiel, welches das Zubereiten einer Mischung umfasst, die Zucker von 10 bis 12 Gew.-%, Glukosesirup 45 von 4 bis 7 Gew.-%, flüssiges Kokosfett von 8,0 bis 11 Gew.-%, Molkenpulver von 2,5 bis 6 Gew.-%, Proteinkonzentrat von 0 bis 3 Gew.-%, Magermilchpulver von 2 bis 7 Gew.-%, Farb- und Aromastoffe von 0,05 bis 0,5 Gew.-%, Stabilisator von 0,5 bis 0,7 Gew.-% und bis 100 Gew.-% ergänzendes Wasser umfasst, wobei die Mischung aufeinanderfolgenden Prozessen der Homogenisierung, Pasteurisierung, Kühlung, Reifung mit Mischen und vorläufigem Gefrieren mit Belüftung unterzogen wird, nach denen die Masse in eine Gussform gegossen wird und Stiele hineingesteckt werden, das Material danach in einem Kühlsystem unter Verwendung eines Kühlmittels abgekühlt wird, in das die Gussform eingetaucht wird, wobei die gefrorenen Eiscremes unter Verwendung eines Greifers aus den Gussformen gelöst werden und mittels eines Förderbandes zu einer Verpackungsanlage transportiert werden, wo sie in Einzel- und Sammelpackungen abgepackt werden, **dadurch gekennzeichnet, dass** der für die Mischung verwendete Stabilisator eine Mischung aus Mono- und Diglyceriden ist, die mit Milchsäure verestert sind, die 55 bis 65 Gew.-% des Stabilisators ausmachen, Mono- und Diglyceride von 15 bis 25 Gew.-%, Xanthan von 10 bis 20 Gew.-%, Guaran von 10 bis 20 Gew.-%, Antioxidantien in Mengen bis zu 100 mg/kg und Antiradikale in Mengen bis zu 100 mg/kg, und wobei die Mischung auf bis zu 190 bis 210 Vol.-% der Mischung vor der Belüftung belüftet wird und wobei das Kühlmittel in einem Wärmetauscher auf Temperaturen zwischen -49 °C und -51 °C abgekühlt wird, der durch Kohlendioxid (CO₂) angetrieben wird, das eine Temperatur zwischen -52 °C und -56 °C aufweist, und wobei die Eiscreme eingefroren wird, um eine Temperatur von unter -18 °C im Gesamtvolumen der Eiscreme zu erreichen.

## Revendications

1. Procédé de fabrication de crème glacée sur un bâtonnet, comprenant la préparation d'un mélange comportant de 10 % à 12 % en poids de sucre, de 4 % à 7 % en poids de sirop de glucose 45, de 8,0 % à 11 % en poids de graisse de coco liquide, de 2,5 % à 6 % en poids de lactosérum en poudre, de 0 % à 3 % en poids de concentré protéique, de 2 % à 7 % en poids de lait écrémé en poudre, de 0,05 % à 0,5 % en poids de colorants et d'arômes, de 0,5 % à 0,7 % en poids de stabilisant et l'eau représentant le complément jusqu'à 100 % en poids, ledit mélange étant soumis aux processus consécutifs d'homogénéisation, de pasteurisation, de refroidissement, de maturation avec mélange et de congélation préliminaire avec aération, après quoi la masse est introduite dans un moule et des bâtonnets sont poussés dans celui-ci, puis la matière est refroidie dans un système de refroidissement au moyen d'un agent réfrigérant, dans lequel le moule est immergé, lesdites crèmes glacées congelées étant retirées des moules à l'aide d'un préhenseur et transportées par bande transporteuse jusqu'à un poste de conditionnement où elles sont emballées en conditionnements individuels et collectifs, **caractérisé en ce que** le stabilisant utilisé dans le mélange est un mélange de mono- et di-glycérides estérifiés avec de l'acide lactique constituant de 55 % à 65 % en poids du stabilisant ; de 15 % à 25 % en poids de mono- et di-glycérides, de 10 % à 20 % en poids de gomme xanthane, de 10 % à 20 % en poids de gomme de guar, d'antioxydants en une quantité allant jusqu'à 100 mg/kg et d'anti-radicaux en une quantité allant jusqu'à 100 mg/kg, et ledit mélange étant aéré jusqu'à 190 % à 210 % du volume du mélange avant aération et ledit agent réfrigérant étant refroidi jusqu'à une température de -49°C à -51°C dans un échangeur de chaleur alimenté par du dioxyde de carbone (CO₂) ayant une température comprise entre -52°C et -56°C, et ladite crème glacée étant congelée pour obtenir une température inférieure à -18°C au sein du volume total de la crème glacée.
